# EUROPÄISCHE PATENTSCHRIFT

(11) **EP 0 595 205 B1**
(45) Veröffentlichungstag und Bekanntmachung des Hinweises auf die Patenterteilung: **18.09.1996**
(21) Anmeldenummer: 93117083.1
(22) Anmeldetag: 21.10.1993
(51) Int. Cl.: G02B 5/20, H04N 5/225

(54) **Objektiv für eine Fernsehkamera zur Aufnahme von Bildern im sichtbaren und infraroten Spektralbereich**
Television camera objective for imaging in both the visible and infrared spectral regions
Objectif pour caméra de télévision dans le domaine visible et infrarouge

(30) Priorität: 29.10.1992 DE 9214727 U
(43) Veröffentlichungstag der Anmeldung: 04.05.1994
(73) Patentinhaber: SIEMENS AKTIENGESELLSCHAFT, 80333 München (DE)
(72) Erfinder: Bauer, Walter, D-76351 Linkenheim-Hochstetten (DE)

(56) Entgegenhaltungen:
- EP-A- 0 122 390
- FR-A- 2 205 209
- PATENT ABSTRACTS OF JAPAN vol. 17, no. 470 (E-1422)26. August 1993 & JP-A-05 110 938 (FUJI PHOTO OPTICAL) 30. April 1993
- PATENT ABSTRACTS OF JAPAN vol. 13, no. 285 (E-780)29. Juni 1989 & JP-A-01 069 166 (SONY) 15. März 1989
- PATENT ABSTRACTS OF JAPAN vol. 12, no. 268 (E-638)27. Juli 1988 & JP-A-63 050 185 (HITACHI) 3. März 1988

## Beschreibung

Die Anmeldung betrifft ein Objektiv für eine Fernsehkamera zur Aufnahme von Bildern im sichtbaren und infraroten Spektralbereich nach dem Oberbegriff des Anspruchs 1.

Zur Überwachung von Außenbereichen werden Fernsehanlagen eingesetzt, die sowohl bei Tag als auch bei Nacht Bilder guter Qualität liefern, wobei die überwachten Bereiche bei Nacht häufig mit IR-Scheinwerfern beleuchtet werden. Für solche Fernsehanlagen sind Kameras mit hoher Lichtempfindlichkeit im sichtbaren Spektralbereich, vor allem aber auch im IR-Bereich erforderlich. Hierzu werden die Kameras mit aufwendigen, IR-korrigierten Objektiven bestückt. Bei Nacht ist die Bildqualität solcher Kameras wegen des verhältnismäßig schmalen Spektralbereichs des empfangenen Lichtes gut. Bei Tag führt jedoch der IR-Anteil des Lichtes zu Bildern mit ungenügender Qualität. Objekte mit hohem IR-Anteil in reflektiertem Licht, wie belaubte Bäume, Rasenflächen, Wiesen, werden zu hell und nahezu konturenlos wiedergegeben; das ganze Bild zeigt zu wenig Kontrast und Schärfe. Mit der vorliegenden Erfindung soll die Bildaufnahme verbessert werden.

Aus der Druckschrift JP-A-1 069 166 (Patent Abstracts of Japan V13 N285 (E780)) ist es bekannt, zu diesem Zweck bei Tage ein IR-Sperrfilter vor das Objektiv zu schwenken, welches bei Nacht, d.h. bei IR-Beleuchtung, ausgeschwenkt wird.

EP-A-0 122 390 offenbart einen Kondensor einer Beleuchtungsapparatur, in dessen zentralem Bereich in Achsennähe ein IR und UV Sperrfilter angebracht ist, um wahlweise entweder den UV Anteil oder den sichtbaren Anteil in ein hinter dem Kondensor angeordnetes Lichtleitkabel einzukoppeln.

Aus der Druckschrift FR-A-2 205 209 ist ein Objektiv für Fersehkameras bekannt, bei dem ein Neutralgraufilter mit drei verschiedenen radial verlaufenden Dichtezonen vor der variablen Blende angeordnet ist, um durch Verstellen der Blendenöffnung im Kombination mit dem Filter eine erheblich größere Intensitätsvariation des durchgelassenen Lichts zu ermöglichen, als mit der Blendenverstellung allein möglich wäre.

Erfindungsgemäß wird diese Aufgabe durch ein Objektiv mit den Merkmalen des Anspruchs 1 gelöst.

Wegen des großen Helligkeitsunterschiedes zwischen Tag- und Nachtaufnahmen sind auch die Unterschiede der Blendenöffnungen sehr groß, so daß das IR-Filter, das bei einer Blendenöffnung für Tagaufnahmen den Querschnitt des Strahlengangs nahezu vollständig abdeckt, bei der großen Blendenöffnung für Nachtaufnahmen nur einen kleinen Teil der Querschnittsfläche des Strahlenganges abdeckt. Bei Tagaufnahmen wird daher der überwiegende IR-Anteil des Lichtes absorbiert, bei Nachtaufnahmen dagegen nur ein vernachlässigbar kleiner Teil.

Vorteilhaft ist das IR-Sperrfilter nahe oder in der Blendenebene angebracht.

Anhand der Zeichnung, in der ein Ausführungsbeispiel der Erfindung dargestellt ist, werden im folgenden die Erfindung sowie Ausgestaltungen und Ergänzungen näher beschrieben und erläutert.

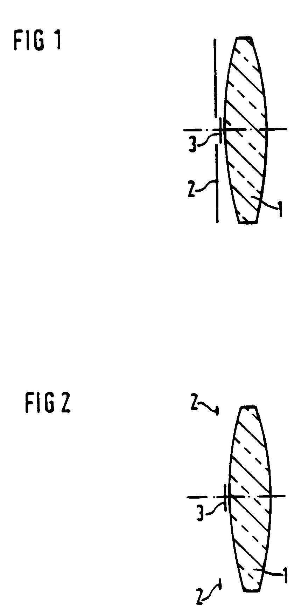

Die Figuren 1 und 2 zeigen den erfindungsgemäß ausgebildeten Teil eines Objektivs mit unterschiedlichen Blendenöffnungen.

In den Figuren ist mit 1 eine Linse eines Objektivs und mit 2 eine Irisblende bezeichnet. In Figur 1 ist die Blende in der Stellung für Tagesaufnahmen gezeichnet, d. h. sie ist nur wenig geöffnet. Das Filter 3, das nahe der Blendenebene liegt, hat etwa die gleiche Fläche wie die Blendenöffnung und ist so angeordnet, daß es den von der Blende 2 freigegebenen Strahlengang abdeckt. Bei Tageslichtaufnahmen wird daher praktisch das gesamte auf eine hinter dem Objektiv angeordnete Aufnahmeröhre gelangende Licht von IR-Anteilen befreit. Durch IR-Anteile bedingte Bildfehler können daher nicht auftreten.

Für Nachtaufnahmen ist die Blende 2 weit geöffnet, wie es in Figur 2 veranschaulicht ist. Das IR-Filter deckt dann nur noch einen kleinen Teil des Strahlengangquerschnittes ab, so daß die Schwächung des IR-Lichtes praktisch keinen Einfluß auf die Bildhelligkeit hat. Da die Anteile des sichtbaren Lichtes im Vergleich zu den der IR-Strahlung sehr klein ist, werden in diesem Falle auch bei weit geöffneter Blende scharfe Bilder erhalten. Vorteilhaft ist das IR-Filter durch Aufdampfen einer geeigneten Substanz auf die Mitte der Linse 1 hergestellt.

## Patentansprüche

1. Objektiv für eine Fernsehkamera zur Aufnahme von Bildern im sichtbaren und IR-Spektralbereich mit einer variablen Blende (2) und einem IR-Sperrfilter (3), dadurch gekennzeichnet, daß die Querschnittsfläche des IR-Sperrfilters (3) derart bemessen ist, daß es bei kleiner Blendenöffnung den überwiegenden Teil der wirksamen Querschnittsfläche des Strahlengangs und bei großer Blendenöffnung nur einen kleinen Teil überdeckt.

2. Objektiv nach Anspruch 1, **dadurch gekennzeichnet**, daß das IR-Sperrfilter (3) in oder nahe der Blendenebene angeordnet ist.

3. Objektiv nach Anspruch 1 oder 2, **dadurch gekennzeichnet**, daß das IR-Filter (3) auf eine Linse (1) des Objektivs aufgebracht, vorzugsweise aufgedampft, ist.

## Claims

1. Objective for a television camera for recording images in the visible and IR spectral region, having a variable diaphragm (2) and an IR-rejection filter (3), characterised in that the cross-sectional area of the IR-rejection filter (3) is dimensioned in such a way that in the case of a small diaphragm opening, the IR-rejection filter covers the predominant portion of the active cross-sectional area of the beam path, and in the case of a large diaphragm opening, said IR-rejection filter covers only a small portion.

2. Objective according to claim 1, characterised in that the IR-rejection filter (3) is arranged in or near to the plane of the diaphragm.

3. Objective according to claim 1 or 2, characterised in that the IR-filter (3) is mounted onto a lens (1) of the objective, advantageously vapour deposited onto the latter.

## Revendications

1. Objectif de caméra de télévision, destiné à la prise de vue dans le domaine spectral visible et infrarouge, comportant un diaphragme variable (2) et un filtre (3) ne laissant pas passer les infrarouges, caractérisé en ce que la surface de la section transversale du filtre (3) ne laissant pas passer les infrarouges est telle qu'il couvre, pour une petite ouverture du diaphragme, la majeure partie de la surface effective de la section transversale du passage pour les rayons et qu'il ne recouvre, lorsque le diaphragme est grand ouvert, qu'une petite partie de celle-ci.

2. Objectif suivant la revendication 1, caractérisé en ce que le filtre (3) ne laissant pas passer les infrarouges est disposé à l'intérieur ou à proximité du plan du diaphragme.

3. Objectif suivant la revendication 1 ou 2, caractérisé en ce que le filtre (3) d'infrarouge est disposé sur une lentille (1) de l'objectif, et est de préférence métallisé sous vide.
